# EUROPEAN PATENT SPECIFICATION

(11) **EP 1 753 969 B1**
(45) Date of publication and mention of the grant of the patent: **17.09.2008**
(21) Application number: 05744143.8
(22) Date of filing: 26.05.2005
(51) Int. Cl.: F16D 65/56

(54) **BRAKE ADJUSTERS**
BREMSNACHSTELLEINRICHTUNGEN
UNITES DE REGLAGE DES FREINS

(30) Priority: 11.06.2004 GB 0413015
(43) Date of publication of application: 21.02.2007
(73) Proprietor: Automotive Products Italia (SV) S.r.l., 17014 Cairo Montenotte Savona (IT)
(72) Inventor: MARRAS, Gaetano, I-60035 Iesi (IT)
(74) Representative: Morrall, Roger
(86) International application number: PCT/IB2005/001633
(87) International publication number: WO 2005/121590

(56) References cited:
- WO-A-03/025415

## Description

This invention relates to brake adjusters, for adjusting the working clearance of the shoes of an automotive drum brake, the adjuster including three co-axial elements:
a first end element having a head portion for engagement with a first brake shoe and a threaded stem portion;
an intermediate element in threaded engagement with the first end element;
a second end element having a head portion for engagement with a second brake shoe and a stem portion slideably connected with the intermediate element and free to rotate relative thereto;
a reaction member mounted on the intermediate element;
a toothed ring gear for rotation with the intermediate element and axially located between the second end element and the reaction member; and
a leaf spring acting between the second end element and the reaction member for pushing the second end element away from the intermediate element, said leaf spring carrying a pawl designed to engage the teeth of the ring gear for rotation of the ring gear to adjust the effective length of the adjuster.

An example of such a brake adjuster is disclosed in the Applicant's published International patent Application No. WO03/025415 A1.

Whilst such brake adjusters are well known and are effective in use they have hitherto been relatively expensive to manufacture.

Thus an object of the present invention is to provide a form of brake adjuster of the kind described which is cheaper to manufacture.

Thus according to the present invention there is provided a brake adjuster as defined in claim 1, in which at least the second end element is a composite metal/plastics component comprising a metal part having a forked head portion for engagement with the second brake shoe and a stem portion for connection with the intermediate element, and a plastics part of generally cylindrical outer form which surrounds the stem portion of the metal part and which is rotatable within a bore in the intermediate element.

Such a construction is cheaper to manufacture since the metal part can be simply formed by stamping from flat metal stock (compared to turning and milling currently) and the plastics part can be injection moulded directly onto the metal part. The use of a plastics part which is rotatable in a bore in the intermediate element avoids the need for greasing of the bore and prevents oxidation of the contacting areas between the second end element and the bore. Also the accuracy of the cylindrical portion of the second end element which enters the bore in the intermediate element can be easily achieved by the moulding process thus avoiding the need for any accurate machining.

Preferably the intermediate element and ring gear are formed as separate components which are secured together for co-rotation.

The invention also provides a brake adjuster as defined in claim 6 in which the intermediate element and ring gear are formed as separate components which are secured together for co-rotation.

Such a construction provides further economies of manufacture since the intermediate element can be formed by a cold pressing operation from, for example, large diameter wire stock with the ring member can conveniently be formed as a pressed sintered part complete with the teeth. This avoids the current more costly method of manufacture in which the intermediate element is turned and drilled on a multi-mandrel lathe and then broached to provide the toothed ring.

The invention also provides a method, as defined in claim 12, of manufacturing a second end element of an adjuster of the type described above the method comprising stamping the metal component from flat metal stock, placing the metal part in a mould, injecting plastics material into the mould to surround the stem portion of the metal part, allowing the plastics material to solidify and removing the completed second end element from the mould.

A plurality of parts may be stamped simultaneously in a multi-impression die tool. Also, a plurality of metal parts may be placed in individual cavities in a multi-cavity moulding tool for simultaneous moulding of the plastics part on each respective metal part.

The present invention will now be described with reference to the accompanying drawings in which:-
Figure 1 is a side view of a vehicle drum brake including a brake adjuster embodying the present invention;
Figure 2 is a perspective view of the brake adjuster used in Figure 1;
Figure 3 is a perspective view of a spring and pawl used in the adjuster of Figure 2;
Figures 4, 5, 6 show side, edge and sectional views of the second end element of the adjuster of figure 2;
Figures 7 and 8 show perspective views of the metal and plastics parts of the second end element;
Figures 9, 10, 11 show side, end and sectional views of the intermediate element and ring gear of the adjuster of figure 2, and

Figures 12 and 13 show perspective views of the intermediate element and ring gear portions.

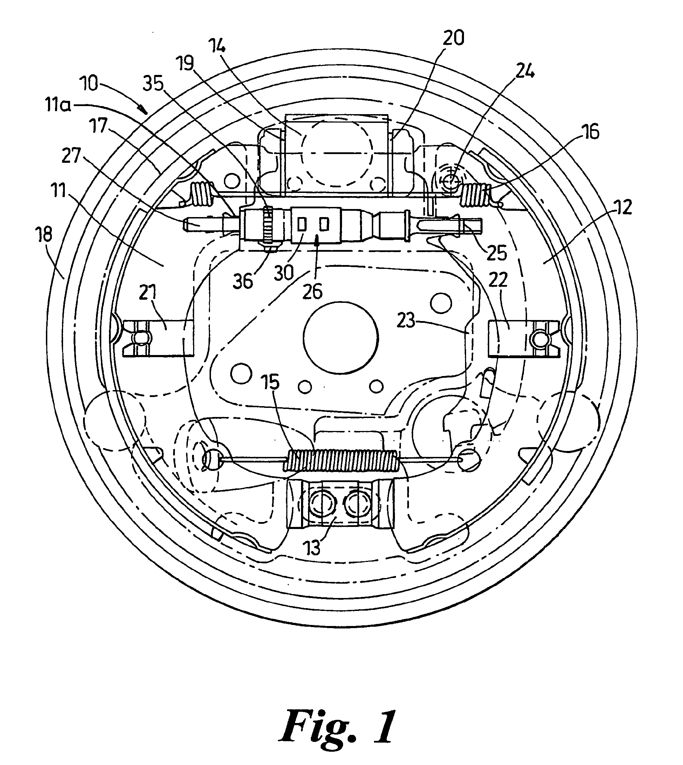

Referring to figure 1 this shows a drum brake 10 having a pair of brake shoes 11,12 which at their lower ends react against a fixed abutment 13 and at their upper ends are forced apart by an hydraulic wheel cylinder 14. The shoes are kept in contact with the abutment 13 by a lower return spring 15 and in contact with the wheel cylinder 14 by an upper return spring 16.

Thus during normal service operation the shoes are brought into contact with the inner surface 17 of brake drum 18 in the conventional manner by actuating wheel cylinder 14 whose pistons 19 and 20 respectively outwardly displace the contacting ends of shoes 11 and 12 to engage the drum. In the conventional manner the two shoes are held down by hold down clips 21 and 22 respectively. The drum brake is also provided with a handbrake operating lever 23 pivoted at 24 on brake shoe 12. The hand brake operating lever contacts the right hand first head element 25 of an adjuster in the form of a strut 26 whose left hand second head element 27 contacts the other brake shoe 11. In conventional manner if, for example, the handbrake lever 23 is pivoted on pivot 24 in a clockwise sense as viewed in figure 1 the handbrake lever will push head element 25 of adjuster strut 26 to the left thus pushing the brake shoe 11 to the left. This in effect causes the two brake shoes 11 and 12 to move apart relative to each other and hence again engage the inner surface 17 of the brake drum 18 thus applying the hand brake.

The adjuster strut 26 basically comprises three components. The first head element 25, the second head element 27 and an intermediate element 28. The head element 25 has a threaded stem portion 29 which is received in a screw threaded bore in the right hand end of intermediate element 28. Similarly the second head element 27 has a stem portion which is axially slideable within an internal bore in the left hand end of intermediate element 28. A sheet metal reaction member 30 surrounds the intermediate element 28 and is axially located relative thereto. A bow spring 31 reacts at one end on an abutment 32 provided on the reaction member 30 and at its other end on an abutment 33 provided on a clip like reaction member 34 mounted on the stem portion of left hand head portion 27. A ring gear 35 having teeth 35a is carried on intermediate element 28 is engaged by a pawl 36 which forms part of bow spring 31.

Bow spring 31 biases head element 27 to the left relative to the intermediate element 28. The effect of this is that when the head element 27 is moved into the bore in the intermediate member when the brake shoes are retracted by the springs 15 and 16 this causes the bow spring 31 to assume a more bowed configuration so that the pawl 36 tends to be drawn up out of engagement with the tooth 35a of ring gear 35 which is it is currently engaging. When the amount of movement of the left hand head portion relative to the right hand portion exceeds a predetermined level (indicating a predetermined amount of retraction of the brake shoes which in turn indicates a predetermined amount of wear) then the pawl will engage the next tooth on ring gear 35 and when the brake is next applied the energy stored in the bowed spring rotates the intermediate element 28 slightly relative to the head element 25 to increase the effective length of the adjuster strut 26 to take up the wear.

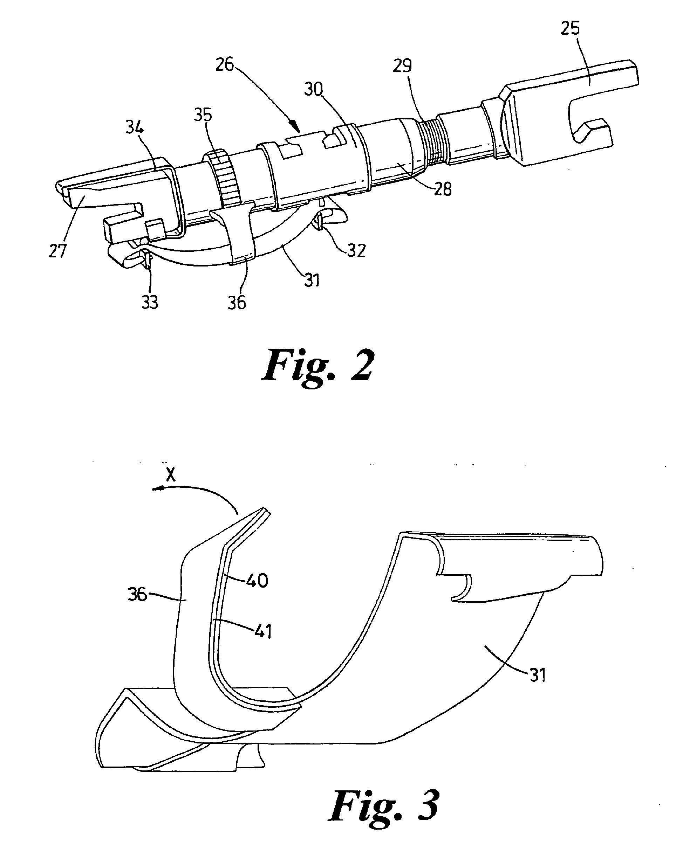

In accordance with the Applicant's earlier PCT Application No. WO 03/025415 A1 a temperature sensitive mechanism is provided to ensure disengagement of the pawl 36 from the teeth 35a of ring gear 35 at high temperatures to prevent over adjustment of the drum brake. This feature is provided by forming the pawl 36 as a bi-metal element as shown in figure 3 in which the pawl comprises a first metal layer 40 which is the same metal as the remainder of the bow spring and a second metal layer 41 which extends only over the pawl element of the spring or, alternatively, by forming the pawl as described in the Applicant's earlier PCT Application No. WO 03/25415 A1. With this type of construction when the bow spring heats up as a result of the general hot condition of the brake the pawl will tend to deflect to the left as shown by arrow X thus tending to disengage the teeth 35a of ring gear 35 and prevent over adjustment of the adjuster strut.

Thus far described the adjuster is of a known type.

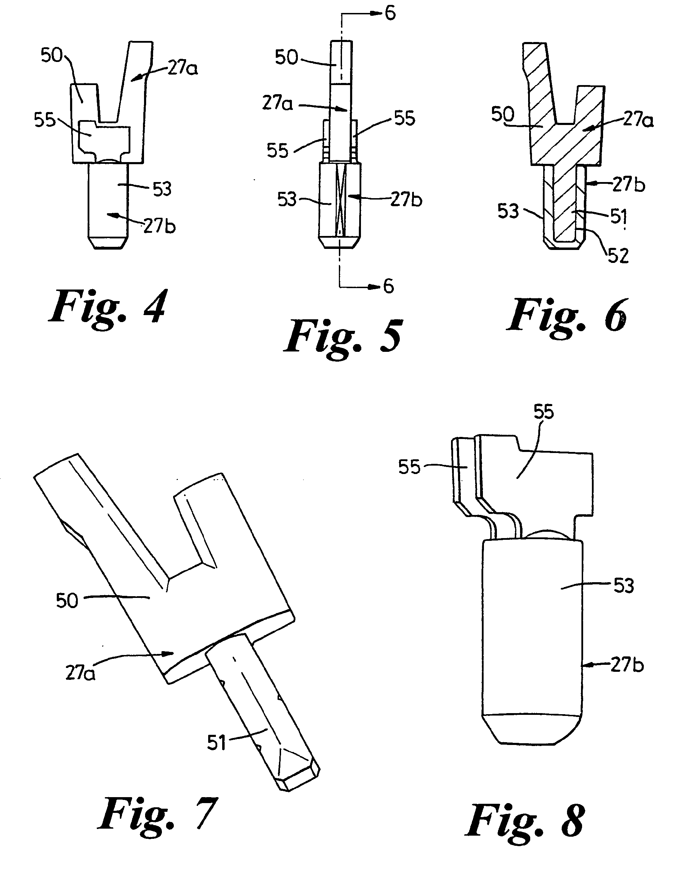

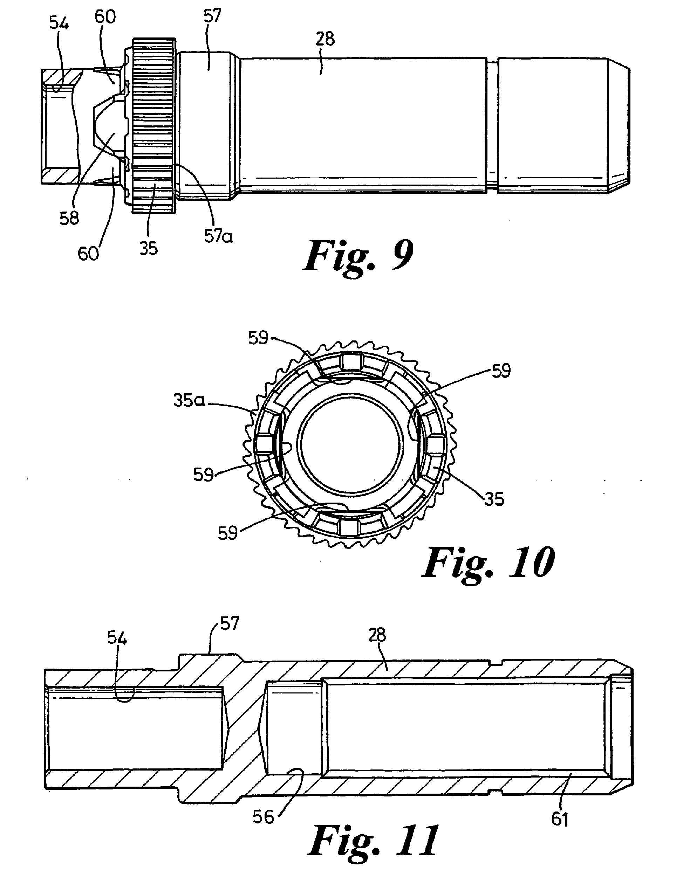

In accordance with the present invention, the second end element 27 is a composite metal/plastics component having a metal part 27a and a plastics part 27b (see figures 4 to 8). The metal part 27a is stamped from flat metal stock and has a forked head portion 50 and a stem portion 51. The plastics part 27b is moulded onto the metal part 27a and has a bore 52 which receives the stem portion 51. The cylindrical external surface 53 of plastics part 27b is dimensioned to fit into the bore 54 provided in intermediate element 28 of the adjuster (see figure 11).

Preferably the metal part 27a is produced in a multi-impression stamping die and a plurality of plastics parts are moulded simultaneously onto a plurality of metal parts in a multi-cavity injection moulding tool. The plastics material used for the plastics part is preferably that sold under the FORTRON trade mark by Hoechst Aktiengesellschaft/Ticona GmbH (for example FORTRON 113L44) which has the necessary hard wearing and temperature resisting properties required to meet with the operating environment of the adjuster. The plastics part 27b includes a pair of ears 55 which extend on either side of the forked head portion 50 of the metal part. These ears increase the total thickness of the second end element in this area to that necessary to co-operate with the existing slot 11 a in shoe 11.

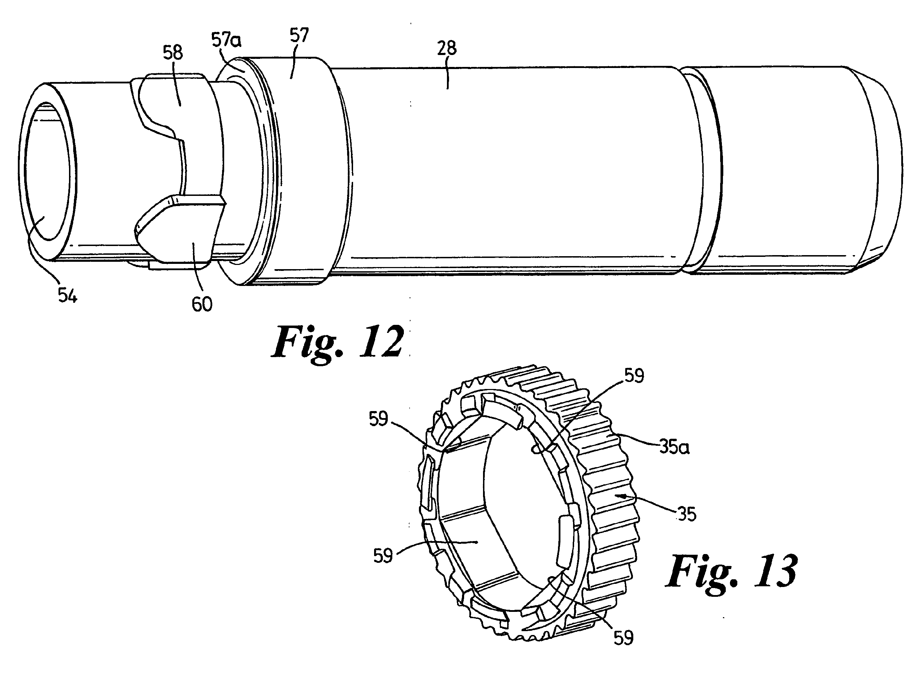

Also in accordance with the present invention the intermediate element 28 is manufactured as a separate component from ring gear 35 (see figures 9 to 13). Intermediate element 28 is manufactured by a cold pressing operation from a large diameter wire blank of appropriate length. In this pressing operation the bores 54 and 56 are formed in the intermediate element 28. Element 28 also includes a raised annular shoulder 57 which is formed during the cold pressing operation and four circumferentially spaced flat zones 58.

Ring gear 35 is formed as a pressed sintered part which includes on its outer periphery ratchet teeth 35a and on its inner periphery four flat zones 59 for cooperation with the flat zones 58 on element 28. Ring gear 35 is positioned on element 28 in abutting contact with the edge 57a of shoulder 57 and flat zones 58 and 59 in contact. Curved zones 60 located intermediate flat zones 58 are then deformed locally to hold the ring gear against shoulder 57a. Thus ring gear 35 is held relative to element 28 both axially and rotationally. The ring gear 35 may also be held relative to element 28 in other ways. For example, the left hand end portion of element 28 may be knurled and ring gear 35 may be pressed onto element 28. Alternatively ring gear 35 may be glued onto element 28.

The necessary screw thread for engagement with the threaded portion 29 on first end element 25 is cut into bore 56 at 61.

As will be appreciated, the above two part construction for the intermediate element 28 enables the element to be constructed more economically and with the use of fewer machining operations.

## Claims

1. A brake adjuster for adjusting the working clearance of the shoes (11, 12) of an automotive drum brake (10), the adjuster including three co-axial elements:
a first end element (25) having a head portion for engagement with a first brake shoe (12) and a threaded stem portion (29);
an intermediate element (28) in threaded engagement with the first end element;
a second end element (27) having a head portion for engagement with a seconde brake shoe (11) and a stem portion slideably connected with the intermediate element (28) and free to rotate relative thereto;
a reaction member (30) mounted on the intermediate element;
a toothed ring gear (35) for rotation with the intermediate element and axially located between the second end element (27) and the reaction member (30), and
a leaf spring (31) acting between the second end element and the reaction member for pushing the second end element away from the intermediate element, said leaf spring carrying a pawl (36) designed to engage the teeth of the ring gear for rotation of the ring gear to adjust the effective length of the adjuster, **characterised in that** at least the second end element (27) is a composite metal/plastics component comprising a metal part (27a) having a forked head portion (50) for engagement with the second brake shoe and a stem portion (51) for connection with the intermediate element, and a plastics part (27b) of generally cylindrical outer form which surrounds the stem portion of the metal part and which is rotatable within a bore (54) in the intermediate element.

2. An adjuster according to claim 1 in which the plastics part is moulded onto the metal part.

3. An adjuster according to claim 2 in which the plastics part is moulded from FORTRON material.

4. An adjuster according to any one of claims 1 to 3 in which the metal part is stamped from flat metal stock.

5. An adjuster according to any one of claims 1 to 4 in which the intermediate element and ring gear are formed as separate components which are secured together for co-rotation.

6. A brake adjuster for adjusting the working clearance of the shoes (11, 12) of an automotive drum brake (10), the adjuster including three co-axial elements:
a first end element (25) having a head portion for engagement with a first brake shoe (12) and a threaded stem portion (29);
an intermediate element (28) in threaded engagement with the first end element;
a second end element (27) having a head portion for engagement with a seconde brake shoe (11) and a stem portion slideably connected with the intermediate element (28) and free to rotate relative thereto;
a reaction member (30) mounted on the intermediate element;
a toothed ring gear (35) for rotation with the intermediate element and axially located between the second end element (27) and the reaction member (30), and
a leaf spring (31) acting between the second end element and the reaction member for pushing the second end element away from the intermediate element, said leaf spring carrying a pawl (36) designed to engage the teeth of the ring gear for rotation of the ring gear to adjust the effective length of the adjuster, **characterised in that** the intermediate element and ring gear are formed as separate components which are secured together for co-rotation.

7. An adjuster according to claim 5 or 6 in which the intermediate element is of generally cylindrical form formed by a cold pressing operation.

8. An adjuster according to any one of claims 5 to 7 in which the intermediate element is formed with abutments (58) to locate the ring gear axially and rotationally relative to the intermediate element.

9. An adjuster according to claim 8 in which the ring gear is located axially on the intermediate element against a radial shoulder (57) by local deformation of the intermediate element on the opposite side of the ring gear from the shoulder.

10. An adjuster according to any one of claims 5 to 9 in which the ring gear is formed as a pressed sintered part complete with the teeth.

11. An adjuster according to claim 8 in which the sintered ring gear includes abutments (59) which cooperate with corresponding abutments (58) on the intermediate element to prevent relative rotation between the ring gear and intermediate element.

12. A method of manufacturing a second end element (27) of an adjuster according to any one of claims 1 to 4, the method comprising stamping the metal part from flat metal stock, placing the metal part in a mould, injecting plastics material into the mould to surround the stem portion of the metal part, allowing the plastics material to solidify and removing the completed second end element from the mould.

13. A method according to claim 12 in which a plurality of metal parts are placed in individual cavities in a multi-cavity mould tool for simultaneous moulding of the plastics part on each respective metal part.

## Patentansprüche

1. Bremsnachstelleinrichtung zum Nachstellen des Arbeitsspiels der Backen (11, 12) einer Kfz-Trommelbremse (10), wobei die Nachstelleinrichtung drei koaxiale Elemente aufweist:
ein erstes Endelement (25), das einen Kopfteil zum Eingriff mit einer ersten Bremsbacke (12) und einen mit einem Gewinde versehenen Schaftteil (29) hat;
ein Zwischenelement (28) in Schraubeingriff mit dem ersten Endelement;
ein zweites Endelement (27), das einen Kopfteil zum Eingriff mit einer zweiten Bremsbacke (11) und einen Schaftteil hat, der mit dem Zwischenelement (28) gleitbar verbunden und frei ist, sich relativ dazu zu drehen;
ein Reaktionsteil (30), das an dem Zwischenelement angebracht ist;
ein Hohlrad (35) mit Außenverzahnung zur Drehung mit dem Zwischenelement und das axial zwischen dem zweiten Endelement (27) und dem Reaktionsteil (30) angeordnet ist; und
eine Blattfeder (31), die zwischen dem zweiten Endelement und dem Reaktionsteil wirkt, um das zweite Endelement weg von dem Zwischenelement zu drängen, wobei die Blattfeder eine Klinke (36) aufweist, die konzipiert ist, um in die Zähne des Hohlrades zur Drehung des Hohlrades zum Nachstellen der wirksamen Länge der Nachstelleinrichtung einzugreifen, **dadurch gekennzeichnet, dass** wenigstens das zweite Endelement (27) ein zusammengesetztes Metall-/Kunststoffbauteil ist, das einen Metallteil (27a), der einen gegabelten Kopfteil (50) zum Eingriff mit der zweiten Bremsbacke und einen Schaftteil (51) zur Verbindung mit dem Zwischenelement hat, und einen Kunststoffteil (27b) mit einer im Großen und Ganzen zylindrischen äußeren Form aufweist, der den Schaftteil des Metallteiles umgibt und in einer Bohrung (54) in dem Zwischenelement drehbar ist.

2. Nachstelleinrichtung nach Anspruch 1, bei der der Kunststoffteil an den Metallteil gegossen ist.

3. Nachstelleinrichtung nach Anspruch 2, bei der der Kunststoffteil aus dem Werkstoff FORTRON gegossen ist.

4. Nachstelleinrichtung nach irgend einem der Ansprüche 1 bis 3, bei der der Metallteil aus metallischem Flachmaterial gestanzt ist.

5. Nachstelleinrichtung nach irgend einem der Ansprüche 1 bis 4, bei der das Zwischenelement und das Hohlrad als getrennte Bauteile hergestellt sind, die für eine gemeinsame Drehung miteinander verbunden sind.

6. Bremsnachstelleinrichtung zum Nachstellen des Arbeitsspiels der Backen (11, 12) einer Kfz-Trommelbremse (10), wobei die Nachstelleinrichtung drei koaxiale Elemente aufweist:
ein erstes Endelement (25), das einen Kopfteil zum Eingriff mit einer ersten Bremsbacke (12) und einen mit einem Gewinde versehenen Schaftteil (29) hat;
ein Zwischenelement (28) in Schraubeingriff mit dem ersten Endelement;
ein zweites Endelement (27), das einen Kopfteil zum Eingriff mit einer zweiten Bremsbacke (11) und einen Schaftteil hat, der mit dem Zwischenelement (28) gleitbar verbunden ist und frei ist, sich relativ dazu zu drehen;
ein Reaktionsteil (30), das an dem Zwischenelement angebracht ist;
ein Hohlrad (35) mit Außenverzahnung zur Drehung mit dem Zwischenelement und das axial zwischen dem zweiten Endelement (27) und dem Reaktionsteil (30) angeordnet ist; und
eine Blattfeder (31), die zwischen dem zweiten Endelement und dem Reaktionsteil wirkt, um das zweite Endelement weg von dem Zwischenelement zu drängen, wobei die Blattfeder eine Klinke (36) aufweist, die konzipiert ist, um in die Zähne des Hohlrades zur Drehung des Hohlrades zum Nachstellen der wirksamen Länge der Nachstelleinrichtung einzugreifen, **dadurch gekennzeichnet, dass** das Zwischenelement und das Hohlrad als getrennte Bauteile hergestellt sind, die für eine gemeinsame Drehung miteinander verbunden sind.

7. Nachstelleinrichtung nach Anspruch 5 oder 6, bei der das Zwischenelement eine im Großen und Ganzen zylindrische Form hat, die durch einen Kaltpressvorgang hergestellt ist.

8. Nachstelleinrichtung nach irgend einem der Ansprüche 5 bis 7, bei der das Zwischenelement mit Widerlagern (58) ausgebildet ist, um das Hohlrad axial und gegen Drehung relativ zu dem Zwischenelement festzulegen.

9. Nachstelleinrichtung nach Anspruch 8, bei der das Hohlrad an dem Zwischenelement axial an einer radialen Stufe (57) durch örtliche Verformung des Zwischenelements auf der von der Stufe entgegengesetzten Seite des Hohlrades festgelegt ist.

10. Nachstelleinrichtung nach irgend einem der Ansprüche 5 bis 9, bei der das Hohlrad als ein druckgesintertes Teil komplett mit den Zähnen hergestellt ist.

11. Nachstelleinrichtung nach Anspruch 8, bei der das gesinterte Hohlrad Widerlager (59) aufweist, die mit entsprechenden Widerlagern (58) an dem Zwischenelement zusammenwirken, um eine Relativdrehung zwischen dem Hohlrad und dem Zwischenelement zu verhindern.

12. Verfahren zum Herstellen eines zweiten Endelements (27) einer Nachstelleinrichtung nach irgend einem der Ansprüche 1 bis 4, wobei das Verfahren aufweist: Stanzen des Metallteiles aus metallischem Flachmaterial, Legen des Metallteiles in eine Gießform, Einspritzen von Kunststoffmaterial in die Gießform, um den Schaftteil des Metallteiles zu umhüllen, Aushärtenlassen des Kunststoffmaterials und Herausnehmen des fertigen zweiten Endelements aus der Gießform.

13. Verfahren nach Anspruch 12, bei dem eine Vielzahl von Metallteilen in einzelne Hohlräume eines mehrere Hohlräume aufweisenden Gießformwerkzeugs zum gleichzeitigen Gießen des Kunststoffteiles an jeden zugehörigen Metallteil gelegt wird.

## Revendications

1. Unité de réglage de frein permettant de régler le jeu de fonctionnement des mâchoires (11, 12) d'un frein à tambour automobile (10), l'unité de réglage comprenant trois éléments coaxiaux :
- un premier élément d'extrémité (25) ayant une tête destinée à s'engager dans une première mâchoire de frein (12), et une tige filetée (29) ;
- un élément intermédiaire (28) engagé par filetage dans le premier élément d'extrémité ;
- un second élément d'extrémité (27) ayant une tête destinée à s'engager dans une seconde mâchoire de frein (11), et une tige reliée par coulissement à l'élément intermédiaire (28) et libre de tourner par rapport à ce dernier ;
- un organe de réaction (30) monté sur l'élément intermédiaire ;
- une dentée (35) destinée à tourner avec l'élément intermédiaire et placée sur l'axe situé entre le second élément d'extrémité (27) et l'organe de réaction (30) ; et
- un ressort à lame (31) agissant entre le second élément d'extrémité et l'organe de réaction afin d'écarter le second élément d'extrémité de l'élément intermédiaire, ledit ressort à lame portant un cliquet (36) conçu pour s'engager dans la denture de la couronne afin que la rotation de celle-ci ajuste la longueur utile de l'unité de réglage, unité **caractérisée en ce qu'**au moins le second élément d'extrémité (27) est un composant composite métal/plastique comprenant une pièce métallique (27a) dotée d'une tête fourchue (50) destinée à s'engager dans la seconde mâchoire de frein, et d'une tige (51) de liaison à l'élément intermédiaire, et une pièce en plastique (27b) de forme externe généralement cylindrique qui entoure la tige de la pièce métallique et qui peut tourner à l'intérieur d'un alésage (54) ménagé dans l'élément intermédiaire.

2. Unité de réglage selon la revendication 1, dans laquelle la pièce en plastique est moulée sur la pièce métallique.

3. Unité de réglage selon la revendication 2, dans laquelle la pièce en plastique est moulée en matériau FORTRON.

4. Unité de réglage selon l'une quelconque des revendications 1 à 3, dans laquelle la pièce métallique est emboutie dans du métal plat.

5. Unité de réglage selon l'une quelconque des revendications 1 à 4, dans laquelle l'élément intermédiaire et la couronne se présentent sous forme de composants distincts qui sont fixés ensemble pour tourner conjointement.

6. Unité de réglage de frein permettant de régler le jeu de fonctionnement des mâchoires (11, 12) d'un frein à tambour automobile (10), l'unité de réglage comprenant trois éléments coaxiaux :
- un premier élément d'extrémité (25) ayant une partie de tête destinée à s'engager dans une première mâchoire de frein (12) et une partie de tige filetée (29) ;
- un élément intermédiaire (28) engagé par filetage dans le premier élément d'extrémité ;
- un second élément d'extrémité (27) ayant une partie de tête destinée à s'engager dans une seconde mâchoire de frein (11) et une partie tige reliée de manière coulissante à l'élément intermédiaire (28) et libre de pivoter par rapport à ce dernier ;
- un organe de réaction (30) monté sur l'élément intermédiaire ;
- une couronne dentée (35) destinée à pivoter avec l'élément intermédiaire (28) et placée sur l'axe situé entre le second élément d'extrémité (27) et l'organe de réaction (30) ; et
- un ressort à lame (31) agissant entre le second élément d'extrémité et l'organe de réaction afin d'écarter le second élément d'extrémité de l'élément intermédiaire, ledit ressort à lame portant un cliquet (36) conçu pour s'engager dans la denture de la couronne afin que la rotation de celle-ci ajuste la longueur utile de l'unité de réglage, unité **caractérisée en ce que** l'élément intermédiaire et la couronne se présentent sous forme de composants distincts qui sont fixés ensemble pour tourner conjointement.

7. Unité de réglage selon la revendication 5 ou 6, dans laquelle l'élément intermédiaire est de forme généralement cylindrique et mis en forme par pressage à froid.

8. Unité de réglage selon l'une quelconque des revendications 5 à 7, dans laquelle l'élément intermédiaire est doté de butées (58) destinées à positionner la couronne dentée axialement et en rotation par rapport à celui-ci.

9. Unité de réglage selon la revendication 8, dans laquelle la couronne dentée est placée axialement sur l'élément intermédiaire contre un épaulement radial (57), par déformation locale de l'élément intermédiaire du côté de la couronne dentée opposé à l'épaulement.

10. Unité de réglage selon l'une quelconque des revendications 5 à 9, dans la mise en forme de la couronne dentée complète avec les dents est réalisée par pressage d'une pièce frittée.

11. Unité de réglage selon la revendication 8, dans laquelle la couronne dentée frittée comprend des butées (59) qui coopèrent avec des butées correspondantes (58) sur l'élément intermédiaire, afin d'éviter toute rotation mutuelle entre la couronne dentée et l'élément intermédiaire.

12. Procédé de fabrication d'un second élément d'extrémité (27) d'une unité de réglage selon l'une quelconque des revendications 1 à 4, le procédé consistant à emboutir la pièce métallique dans du métal plat, placer la pièce métallique dans un moule, injecter de la matière plastique dans le moule pour entourer la tige de la pièce métallique, laisser la matière plastique se solidifier et retirer du moule le second élément d'extrémité terminé.

13. Procédé selon la revendication 12, dans laquelle une pluralité de pièces métalliques est placée dans des empreintes individuelles dans un moule à plusieurs empreintes, afin de mouler simultanément la pièce en plastique sur chaque pièce métallique respective.
